# EUROPEAN PATENT SPECIFICATION

(11) **EP 3 258 791 B1**
(45) Date of publication and mention of the grant of the patent: **11.05.2022**
(21) Application number: 16752734.0
(22) Date of filing: 15.02.2016
(51) Int. Cl.: A23J 1/16, A23J 3/14

(54) **METHOD FOR PREPARING A FOOD GRADE COAGULATED POTATO PROTEIN CONCENTRATE**
VERFAHREN ZUR HERSTELLUNG EINES KOAGULIERTEN KARTOFFELPROTEINKONZENTRATS MIT NAHRUNGSMITTELQUALITÄT
PROCÉDÉ DE PRÉPARATION D'UN CONCENTRÉ DE PROTÉINE DE POMME DE TERRE COAGULÉE DE QUALITÉ ALIMENTAIRE

(30) Priority: 16.02.2015 SE 1550170
(43) Date of publication of application: 27.12.2017
(73) Proprietor: Coöperatie Koninklijke Avebe U.A., 9641 GK Veendam (NL)
(72) Inventor: JOHANSSON, Kalle, 291 65 Kristianstad (SE); SAMUELSSON, Mathias, 291 92 Kristianstad (SE)
(74) Representative: V.O.
(86) International application number: PCT/SE2016/050114
(87) International publication number: WO 2016/133448

(56) References cited:
- WO-A1-97/03571
- WO-A1-2008/069651
- NO-B- 143 559
- US-A1- 2008 226 807
- MEUSER F. ET AL.: 'Potato Protein for Human Use' JOURNAL OF THE AMERICAN OIL CHEMISTS SOCIETY vol. 56, no. 3, 01 March 1979, pages 449 - 450, XP055480694
- KNORR D. ET AL.: 'Potato Protein Concentrates: The Influence of Various Methods of Recovery upon yield, Compositional and Functional Characteristics' JOURNAL OF FOOD PROCESSING AND PRESERVATION vol. 1, no. 3, 01 January 1977, pages 235 - 247, XP000560812
- RALET M-C. ET AL.: 'Fractionation of Potato Proteins: Solubility, Thermal Coagulation and Emulsifying Properties' LWT- FOOD SCIENCE AND TECHNOLOGY vol. 33, 01 August 2000, pages 380 - 387, XP001034682 DOI: 10.1006/FSTL.2000.0672

## Description

### Technical Field of the Invention

The present invention relates to a method for the preparation of a food grade coagulated potato protein concentrate, to the food grade coagulated potato protein concentrate as such, to use thereof as an ingredient in a food product, and to a food product as such comprising said food grade coagulated potato protein concentrate.

### Background Art

Native potato starch is an important ingredient in the food industry. The manufacturing process starts with grinding of the potatoes with a view to releasing fibers, starch and fruit juice into a potato pulp. The potato pulp is further processed to separate and purify starch and fibers which are used as food ingredients. The fruit juice which is separated from starch and fibers is considered as a protein rich side flow, historically used as a low value fertilizer. The fruit juice contains nutrients like potassium, phosphorus, and nitrogen compounds, as well as potato protein. To increase the value of this, side flow methods for extraction of the protein in the fruit juice have been developed.

The most common application for the potato protein is as a feed or fodder ingredient for animals, and for this kind of application the protein is extracted by use of acid and heat coagulation. The technology for producing heat coagulated potato protein for the feed application is disclosed in the literature and is well-known by the skilled person in the art.

When a coagulated potato protein is produced it is coagulated at the isoelectric point of the protein which is reached by adjusting the pH with an acid. To obtain a high yield and a cost efficient manufacturing it is recommended to combine isoelectric point precipitation with heat coagulation. As a result of the coagulation protein flocks are formed. The flock size is dependent on the temperature and the treatment time, wherein a higher temperature and a longer treatment time give larger flocks. Large flocks of protein are easier to dewater, making the manufacturing more cost-effective, as the evaporation of water in the drying process is minimized. Coagulation normally occurs at a pH of 4.5-5.5 and at a temperature of 90-145°C.

Without further physical treatment of the coagulated potato protein flocks the particle size will be approximately 70-350 µm (D90%) after drying, more often 120-170 µm (D90%). This coarse powder of coagulated potato protein is perceived as having an unwanted gritty mouthfeel when used as an ingredient in food applications.

As stated above, coagulated potato protein produced by traditional technology is normally used only for animal feed consumption. For such a protein to be approved for food applications it is required to first reduce the content of toxic substances in the form of glycoalkaloids present in the potatoes. The glycoalkaloids found in potatoes are mainly α-solanine and α-chaconine, and it is known that for an untreated coagulated potato protein the level of TGA (Total GlycoAlkaloids) is 2000-6000 mg/kg DM protein concentrate, i.e. a protein concentrate with approximately 80% protein content, calculated with % N·6.25, wherein the remainder is water, ashes, carbohydrates, and fibers. However, potato protein to be used in a human food product has to be purified to a level where the TGA is greatly reduced, preferably below 150 mg/kg. In addition to the TGA level it is also defined that for a food grade coagulated potato protein another potential toxic substance, lysinoalanine, must be controlled. According to the legislation the total level must be below 500 mg/kg, and the free level must be below 10 mg/kg. Lysinoalanine is a potential toxic compound that can be formed during manufacturing of potato protein under alkaline conditions in combination with high temperature. Compared to TGA it is known that lysinoalanine is not present in the potato in its native state. Therefore, it is only of interest to make sure that it has not been formed during the manufacturing process, and it is therefore considered as a basic fulfillment to be able to define the protein concentrate as a food grade protein. Nevertheless, the TGA levels depend on the purification level of the protein, i.e. the protein concentration in the protein concentrate. According to EFSA (European Food Safety Authority) the TGA has to be below 150 mg/kg at a protein concentration of 48% as is. This has been stated in a novel food application from 2002 (the Commission Decision of 15 February 2002) authorizing the placing on the market of coagulated potato proteins and hydrolysates thereof as novel food ingredients under Regulation (EC) No 258/97 of the European Parliament and of the Council *(Official Journal L 050, 21*/*02*/*2002 P. 0092* - *0093).*

Calculated as protein equivalents, the TGA level has to be below 3.125 mg/kg protein equivalents. On the other hand, the toxicity of a potato protein concentrate is not only depending on the TGA level but also on the total dosing in the food and the daily consumption. Nevertheless, as stated above, the food grade coagulated potato protein concentrate must have a TGA concentration below 150 mg/kg as is to be approved for the European food industry.

Methods for reducing the content of glycoalkaloids are disclosed in the literature and in some patent publications. Coagulated potato protein concentrates produced according to the methods disclosed in the literature and the referred patent publications have the disadvantage that they are insoluble and also have an ability to give rise to a gritty or bad mouth feel. Because of these characteristics the use of coagulated potato proteins in food applications is very limited, and therefore coagulated potato protein concentrates are rarely used in the food industry.

As an alternative to heat coagulated potato proteins, different methods to produce native proteins have been developed, i.e. a protein concentrate that is non-coagulated and consequently has the same characteristics as an untreated native protein found in the potato in a natural state. It has also been developed methods to produce hydrolysates based on a heat coagulated protein. In the latter process a heat coagulated protein is extracted and is further treated with enzymes which will hydrolyse the protein. The hydrolysation will increase the solubility of the protein and consequently make it more functional in a food application in regards to water uptake, solubility, emulsification properties, foaming, etc.

The recovery method used for potato proteins is normally including heat coagulation. In "Ernährung Vol. 2 nr. 9, 1978 by Knorr and Steyrer" a method is disclosed wherein proteins are recovered from an acidified juice that is heated to a temperature of approximately 98°C. The protein fraction is thereafter concentrated by centrifugation. Next, the pH of the fraction is adjusted to 7, after which the product is dried. The recovered protein product is aimed for feed application due to high amount of glycoalkaloids.

In GB-A 1 544 812, in DE-A-199007725, and in Finley and Hautala in "Food Product Development 10(3), pp 93-93(1976)" it is disclosed how potato proteins can be recovered from potato processing waste streams. JP (A) 08 140585 discloses an isolation method for coagulated potato protein by heat coagulation and by hydrolysis of the resultant dispersion of coagulated protein by use of a protease.

In "Lebensm. Wiss. U. Technol.13, 297-301 (1980)", Knorr reports the effect of the pH prior to drying on the water binding properties of a potato protein product that has been obtained by acidic and thermal coagulation. The pH of the coagulated protein is neutralized with sodium hydroxide to a pH value of 7 prior to drying.

In EP 1392 126 B1 a method for recovery of a heat coagulated potato protein is disclosed, wherein said coagulated protein's taste characteristics, odor characteristics, and mouth feel is improved by adjusting the coagulated protein concentrate with alkali to a pH between 8 and 10.5 prior to drying.

In DK162134B (Danish version of NO 143559B B) a method for recovery of heat coagulated potato protein for feed aplications is disclosed, and said method involves a process for reduction of glycolkaloids by treating said protein concentrate with acid and heat prior to drying. Further to this, it is disclosed that the particle size of said protein has a D90 value of less than 74µm.

US 2008/226807 describes potato protein fibers with a low protein content which provide for a pleasant mouthfeel due to the capacity to bind or integrate water.

WO 2008/069651 pertains to a soluble, native potato protein isolate, and not to a coagulated potato protein.

US 6 042 872 describes a feed grade coagulated potato protein product. The protein product has a relatively large particle size.

EP 0 700 641 describes a food grade plant protein product which has been subjected to alcoholic extraction in order to remove non-protein materials. This document fails to describe which components can be removed to what degree from the protein material.

No active reduction of the particle size by physical means is disclosed which is needed to reach satisfactionary organoleptic properties in food applications.

To conclude, there is a need for a coagulated food grade potato protein product for human use that has a satisfactory mouth feel and taste and a content of toxic substances below the critical value.

### Summary of the Invention

An object of the present invention is to fulfill the above-mentioned need and to provide a coagulated food grade potato protein product with the desired properties.

This object is achieved with a method according to claim 1, as well as with a food grade coagulated potato protein product produced with said method, by the use of said product as a food grade additive in food, and with a food product comprising said food grade coagulated potato protein concentrate.

In one aspect the present invention refers to a method for the preparation of a food grade coagulated potato protein concentrate, wherein it comprises the steps of
a) separating fibers and starch from a potato pulp, wherein a potato fruit juice containing potato protein is obtained,
b) coagulating the potato protein in the potato fruit juice by adjusting the pH to an acidic value and by heating, wherein a coagulated potato protein slurry containing particles of coagulated potato protein is obtained,
c) reducing the total glycoalkaloid content in the coagulated potato protein slurry to less than 150 mg/kg protein concentrate, wherein the total glycoalkaloid content is reduced in a washing step comprising dewatering of the coagulated potato protein slurry and subsequent addition of water, wherein said washing step is performed one or more times, each time followed by a pH adjustment of the protein slurry to 2-7, and heating of the protein slurry to 20-150°C, and
d) actively reducing the particle size of the of potato protein particles in the coagulated potato protein by physical means in such a way that a coagulated potato protein concentrate is obtained in which 90 % of said particles have a diameter of less than 55 µm, measurable with a Malvern particle analyzer model Mastersizer S with dry powder feeder.

In another aspect the present invention relates to a food grade coagulated potato protein product produced according to the inventive method, having a total glycoalkaloid content of less than 150 mg/kg protein and containing particles where 90% have a particle diameter of less than 55 µm.

In a further aspect the present invention relates to use of the coagulated potato protein product as a food grade additive in a food product, wherein it is added as a concentrate to the food product and is mixed therewith.

In still a further aspect the present invention relates to a food product comprising the inventive coagulated potato protein product, wherein said food product is a dairy product, e.g. creme fraiche, yoghurt, milk based beverages, and drinking yoghurt; a bakery product, e.g. soft bread, crisp bread, crackers etc; a meat product like meat balls and products related to comparable mixed meat applications; different kind of sausages; breakfast cereals; and food bars.

The inventive coagulated potato protein product may also be used as an ingredient with a view to enriching different kinds of ready meals in view of proteins.

### Brief Description of the Drawings

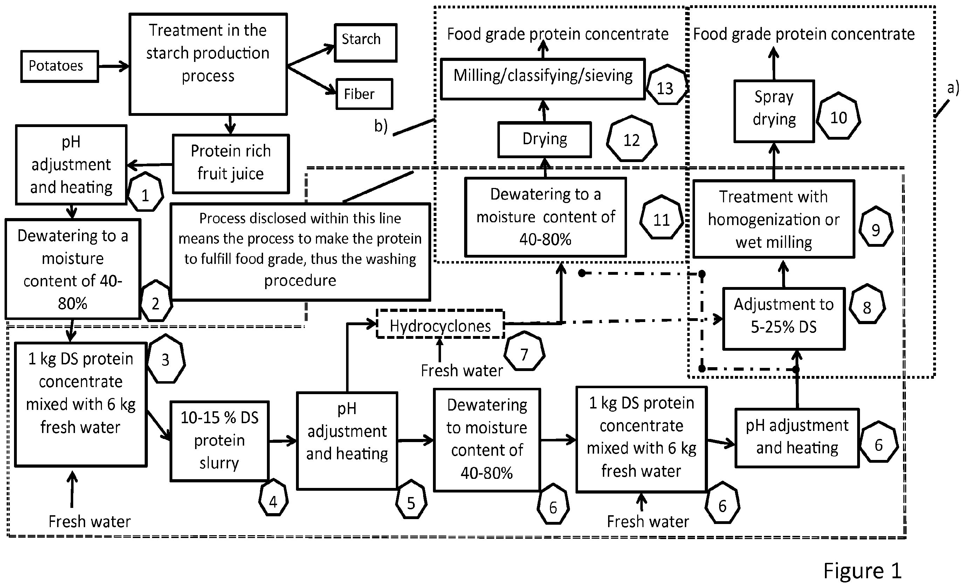

Fig.1 illustrates schematically in a flow chart some embodiments of the method according to the present invention, wherein specific method steps (1) - (13) are shown.

### Detailed Description of the Invention and Preferred Embodiments thereof

First, some expressions used in the application text are defined in the following way.

The expression "potato protein" used throughout the application text is intended to mean the proteins present in potato juice obtained after the separation of fibers and starch from a potato pulp. More precisely, potato juice contains a relatively high amount of proteins, more precisely up to 1.5 % by weight. They can be divided into three groups: (i) a high molecular weight (HMW) fraction of highly homologous acidic 43 kDa glycoproteins (40-50 w% of total potato protein), (ii) basic low molecular weight (LMW) 5-25 kDa among which are glycoproteins (30-40 w% of total potato protein) and (iii) other proteins (10-20 w% of total potato protein). Patatin (39-43 kDa) is a family of glycoproteins that has lipid acyl hydrolase and transferase activities and will predominantly be part of the HMW fraction. The LMW fraction typically comprises heat sensitive protease inhibitors (4.3-25 kDa) and other proteins generally with a low molecular weight. Potato carboxypeptidase (4,3 kDa) can resist temperatures of more than 70°C (V. Bartova, J. Barta, 2008), and according to D.Y. Huang (1981) it resists cooking during 30 min. Also chymotrypsin and trypsin inhibitors are heat stable during cooking of potatoes. Said heat stabile protein are likely the non-denaurated proteins.

There is no exact and defined amino acid composition of the potato protein, but with the basis of a lot of analyses performed, a typical potato protein product involved in the present invention has the following composition, as shown in Table 1

**Table 1**

| Typical Amino acid composition | |
|---|---|
| Alanine | 4.5% |
| Arginine | 4.6% |
| Aspartic acid | 11.8% |
| Cystine | 1.5% |
| Phenylanaline | 6.0% |
| Glumatic acid | 10.6% |
| Glycine | 4.8% |
| Histidine | 2.0% |
| Hydroxiproline | <0.2% |
| Isoleucine | 5.9% |
| Leucine | 9.8% |
| Lysine | 7.3% |
| Methionine | 2.0% |
| Ornitine | <0.2% |
| Proline | 4.8% |
| Serine | 5.3% |
| Threonine | 5.3% |
| Thyptophane | 1.7% |
| Tyrosine | 5.5% |
| Valine | 6.5% |
| Total | Approx. 100% |

The expression "food grade" used throughout the application text is intended to mean a food ingredient and/or additive which fulfill the legislations for authorization to be put on the food industrial market as an approved food ingredient and thereby approved to be used in different kinds of food products intended to be sold to the consumer market.

The expression "potato protein concentrate" used throughout the application text is intended to mean a protein concentrate with a protein content of more than 60 % w/w DM (dry substance), calculated as % N ·6.25, wherein the % N is the nitrogen content analyzed with a Kjeldahl nitrogen analyzer, and the factor 6.25 is the converting factor used to recalculate the % N value to the protein content. The protein concentrate has been extracted from potatoes, *solanum tuberosum,* and has been purified into a powder with a moisture content of 1-20%.

The expression "DM" used throughout the application text is intended to mean "Dry Matter", which is a measure of total solids obtained from evaporating a solution under vacuum to dryness. DM may also be referred to as "total solids by drying" or "dry solids". Alternate expressions with an equivalent meaning are "dry substance" and "dry weight).

The expression "glycoalkaloid" used throughout the application text is intended to mean a family of chemical compounds derived from alkaloids in which sugar groups are appended. There are several glycoalkaloids that are potentially toxic, and in potatoes, *solanum tuberosum,* the term glycoalkaloid normally means α-solanine and/ or α-chaconine which are the most common found glycoalkaloids. Also solanidine, the aglycon after enzymatic or acid hydrolysis of α-solanine and α-chaconine, is toxic and should be included in the glycoalkaloid analysis. Besides being a family of toxic compounds that can give rise to poisoning symptoms upon consumption, glycoalkaloids are typically bitter tasting, and produce a burning irritation in the back of the mouth and side of the tongue when eaten and thereby have a negative effect on the taste.

The expression "D90 value" used throughout the application text is intended to mean that 90 percent of the volume size distribution has a particle diameter that is lower than a certain value. The particle size distribution of the final coagulated potato protein concentrate can be determined through low angle laser light scattering (LALLS), such as by a Malvern particle analyzer model Mastersizer S with dry powder feeder.

The expression "physical means" used throughout the application text is intended to mean an operation in which a particle is exposed to physical stress in a process equipment. Such equipment could for example be a homogenizer, a wet or dry mill, or a dryer with milling function.

Some embodiments of the method according to the present invention will now be disclosed below with reference to the flow chart shown in Figure 1, inter alia referring to the method steps (1) - (13) shown therein.

In one embodiment of the inventive method the fruit juice obtained after the separation of fibers and starch from a potato pulp is treated with an acid to a pH value of 2-7, preferably 3.0-5.5, more preferably 3.5-5.0. The fruit juice is further heated so that the protein will coagulate. The heating temperature is 70-160°C, preferably 90-150°C, more preferably 100-140°C, even more preferable 110-130°C (step 1). During the heating the protein is coagulated and protein flocks are built up in the fruit juice, thereby forming a protein slurry. With a view to increasing the efficiency and to acquiring an optimal size of the protein flocks to facilitate a subsequent dewatering, the fruit juice may be held at the heating temperature in holding cells for a certain time period. The holding time is 0-30 minutes, preferably 0-20 minutes, and even more preferable 1-5 minutes. The fruit juice containing protein flocks, i.e. the protein slurry, is further pumped to a dewatering process with a view to dewatering the coagulated protein (step 2). In the preferred technology for dewatering, a kind of separator, i.e. a centrifugal decanter or a comparable device, is used, in which the protein flocks are dewatered. A rotating vacuum filter, normally used for dewatering of non-pregelatinized granular starch, is also convenient for the dewatering of the protein. The dewatering is preferably made in a centrifugal decanter, but the invention is not limited to this specific equipment. It is important that the protein flocks are dewatered to a moisture content of 40-80%, preferably 45-70%, even more preferable 50-60%.

To reach a lower level of TGA (Total GlycoAlkaloides) in the protein it has to be further washed in a second washing step with water, and accordingly the dewatered protein concentrate is further mixed with fresh water (step 3). The recommended ratio between protein and water is 1:6, but this ratio may vary substantially. Consequently, 1 kg dry substance of protein concentrate from the dewatering process having a moisture content of 40-80% is mixed with 6 kg of fresh water, thereby giving a protein concentration of approximate 10-15% DM (step 4).

It has been found that the purification, i.e. the reduction of TGA, is more efficient at acidic pH and higher temperatures. Thus, by reducing the pH and increasing the temperature the reduction of TGA can be further promoted. Consequently, the pH in the protein slurry is adjusted to 2-7, preferably 3.0-5.5, more preferably 3.5-4.5. The protein slurry is further heated to 20-150°C, preferably 50-150°C, more preferably 80-150°C (step 5).

In the inventive method the protein slurry is additionally washed with water, wherein the protein slurry first is dewatered, e.g. by centrifugation, and the dewatered protein concentrate once again is mixed with fresh water, followed by adjustment to a pH of 2-7, preferably 3.0-5.5, more preferably 3.5-4.5. The protein slurry is further heated to 20-150°C, preferably 50-150°C, more preferably 80-150°C (step 6).

In another embodiment the protein slurry treated in step 5 may be treated with water in one or more hydrocyclones in a hydrocyclone washing process (step 7), in which the water in the protein slurry is replaced with fresh water in a counterflow. The hydrocyclone process technology as such is well-known by the skilled person in the art, but not in this context, i.e. for washing of proteins. The hydrocyclone process alternative has surprisingly turned out to be much more efficient than other alternatives, e.g. in that it consumes less water. Further, it has a low investment cost, is easy and flexible to use, i.e. the washing procedure and thus the water consumption can be easily adjusted as it is an inline washing procedure. Consequently, the washing efficiency may easily and quickly be adjusted. Further to these advantages, a hydrocyclone process is a production process that generally is used, although for another purpose, in the production of potato starch and is thus already available. It has turned out that the yield is high, meaning that the waste of material, i.e. the loss of proteins in the washing step, is surprisingly low when using hydrocyclones.

The steps of washing and purification of the coagulated potato protein involved in the inventive process are not limited to the methods disclosed above, as the variation of technology used to reduce the TGA levels is substantial. As mentioned above, according to the inventive method, the heat coagulated protein is purified by washing the coagulated protein flocks with water at an acidic pH 2-7, preferably 3.0-5.5, even more preferable 3.5-4.5 and the slurry is further heated to 20-150°C, preferably 50-150°C, even more preferable 80-150°C. Further, the total water consumption for obtaining the TGA content and the taste desired is 1-60 kg/kg DM protein concentrate, preferably 1-40 kg/kg DM protein concentrate, more preferable 1-30 kg/kg DM protein concentrate, even more preferable 1-20 DM kg/kg protein concentrate. After the washing steps the heat coagulated potato protein concentrate has a TGA level below 150 mg/kg DM, preferably below 100 mg/kg DM, more preferably below 50 mg/kg DM.

The purified heat coagulated potato protein concentrate obtained according to the embodiments disclosed above and having a satisfactory low TGA level is further treated by physically means with a view to improving the organoleptic properties according to either alternative a) or alternative b) in the following way.

According to alternative a), which is shown in Fig. 1, the purified heat coagulated potato protein having a reduced TGA content is mixed once again with fresh water to a concentration of 5-25 %, preferably 10-20 %, more preferably 12-15 % (step 8). The protein is further treated in a homogenizer with a view to reducing the particle size of the coagulated potato protein flocks (step 9). The particle size reduction is depending on the pressure used in the homogenizer. The pressure may be held at 50-2000 bar, preferably 100-1500 bar, more preferable 200-1000 bar. The type of homogenizer to be used may be any conventional one, but is in one embodiment a two-step homogenizer as this is particularly efficient. The homogenizing technology is well-known by a skilled person in the art. As an alternative to a homogenization step, a wet milling process can be used with a view to decreasing the particle size of the protein particles. After such a homogenization or wet milling the protein slurry is further dried (step 10) to have a moisture content of 1-20% DM, preferably 5-15% DM, more preferably 8-12% DM. The type of drier to be used may be any conventional one, but it is preferred to use spray drying with a spray drier. After the homogenization or wet milling step and the subsequent drying of the protein slurry, the particle size of the heat coagulated potato protein concentrate has been greatly reduced to the desired level.

According to alternative b), which also is shown as an alternative in Fig. 1, the purified heat coagulated potato protein concentrate obtained as disclosed above and having a satisfactory low TGA level may alternatively be further dried without any homogenization or wet milling. If using a decanter or vacuum filter for the washing procedure of the protein, the protein may be dried directly. In the case of washing the protein in hydrocyclons according to step (7), the protein slurry is first concentrated in a decanter or vacuum filter by dewatering the protein slurry prior to drying (step 11). The protein is then further dried (step 12) to a moisture content of 1-20%, preferably 5-15%, more preferably 8-12%, in any type of conventionally used drier, e.g. a flash drier, a spin flash drier, a drum drier, a spray drier etc. The dried heat coagulated protein is further milled, classified, and/or sieved (step 13). After the milling, classification, and/or sieving has been performed, the particle size of the heat coagulated potato protein has been greatly reduced to the desired level.

The particle size of the heat coagulated potato protein, which has been treated according to step a) or b) above, may be measured with a Malvern particle analyzer model Mastersizer S with dry powder feeder. According to the inventive method, a D90 value below 55 µm, preferably below 45 µm, more preferable below 35 µm has been obtained. As defined above, the D90 value means that 90 percent of the volume size distribution has a particle diameter that is lower than a certain value.

The product in the form of a heat coagulated potato protein concentrate may also be characterized by use of a sedimentation analysis. The sedimentation of a particle is depending on the particle size and the surrounding media. By mixing a small amount of protein powder in water and letting the particles sediment for a certain period of time, the resulting pellet will give a good correlation to the actual particle size distribution. The particles should be as small as possible, but due to practical problems the lower particle size is limited with a view to maintaining the cost efficiency. The pellet volume after 30 minutes sedimentation of 1 g potato protein in 1000 ml water is referred to as the sedimentation volume index (SVI) for the sample. The SVI should after protein refining be less than 4.5 ml, preferably less than 2.4 ml, more preferable less than 0.8 ml.

The achieved heat coagulated potato protein produced with the method according to the present invention has turned out to have unique characteristics. More precisely, due to the reduced particle size in combination with the purification level, i.e. reduction of TGA, the protein product produced is organoleptically satisfactory and has a neutral taste. Further, the gritty mouth feeling that heat coagulated proteins in the prior art normally provides is totally eliminated due to the inventive method. The protein concentrate obtained also performs as a semi-soluble protein, which when mixed with water not is precipitated, like a heat coagulated protein. This unique property can be shown by mixing the protein with water and measuring the sedimentation rate.

As stated above, the product according to the present invention may be used for entirely new applications in the food industry, more precisely as a nutritional additive or ingredient in food for human use, such as, without limitation thereto, a dairy product, e.g. creme fraiche, yoghurt, milk based beverages, and drinking yoghurt; a bakery product, e.g. soft bread, crisp bread, crackers etc, meat products like meat balls and products related to comparable mixed meat applications; different kind of sausages; breakfast cereals; and food bars. The inventive coagulated potato protein product may also be used as an ingredient to enrich different kind of ready meals in view of proteins.

It should also be noted that the total amount of glycoalkaloides (TGA) in question is given in relation to the protein concentrate to be sold. After having mixed said concentrate with the food, the TGA in the final food product becomes lower due to the dilution effect.

The achieved heat coagulated potato protein produced with the method according to the present invention is a free flowing powder with a white to brownish color. The smell and taste is bland to slight potato. As mentioned above, the inventive potato protein may be used as a nutrient ingredient in many kinds of food products, e.g. in a dairy product, and is mixed therein in an early step in the production, i.e. normally before fermentation and/or UHT treatment. It may also be used as a nutrient ingredient in a bakery product, e.g. soft bread, crisp bread, crackers etc, and is mixed into the dough before fermentation and baking. It may also be used as a nutrient ingredient in meat products, such as meat balls, and in products related to comparable mixed meat applications, as well as in different kind of sausages, and are in those kinds of applications mixed into the meat and fat formulation before cooking. I may also be used as a nutrient ingredient in breakfast cereals with a view to increasing the protein content, and in this kind of application the product may be mixed into a cereal product before cooking, baking, and extrusion, i.e. in the process of preparing a breakfast cereal ingredient to be used in different kinds of breakfast cereal products for the consumer market. It may also be used as a nutrient ingredient in food bars and in this case it is mixed with other ingredients before cooking and or baking of the bar. The enclosed protein product may also be used as a nutrient ingredient to enrich different kinds of ready meals in view of the protein content. The inventive potato protein may also be regarded as a functional ingredient for the above-mentioned food applications.

While the invention has been disclosed with reference to a number of embodiments, it will be understood by those skilled in the art that various changes may be made and equivalents may be substituted for elements thereof without departing from the scope of the present invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims.

### Examples

In the examples below different methods for the production of the food grade coagulation potato protein concentrate are disclosed.

### Example 1

10 000 g of potato fruit juice collected from a conventional starch manufacturing process was centrifuged at 3000 x G for 3 minutes to remove residual starch and fiber particles. The pH value was adjusted to 3.5. The fruit juice was further heated with steam in a jet cooker to 130 °C and was held for 3 minutes. The protein slurry obtained was cooled to 40 °C. The protein slurry was further centrifuged at 3000 x G for 3 minutes, the supernatant was discarded and the pellet obtained was mixed with 6 000 g of fresh water. The protein slurry was then mixed for 10 minutes before centrifugation at 3000 x G for 3 minutes. The supernatant was once again discarded and the pellet was mixed with 6000 g fresh water during 10 minutes. The protein slurry was centrifuged at 3000 x G for 3 minutes before discarding the supernatant. The pellet was then diluted to a content of 10-15 % based on dry matter (DM) with fresh water to reach a viscosity suitable for homogenization in a homogenizer. The slurry was homogenized at 800 bars before spray drying with 160 °C as inlet temperature. The TGA of the dry protein concentrate powder was below 150 mg/kg. The particle size of the dry protein powder was analyzed with a Malvern Mastersizer S, and it showed that 90% of the particles had a diameter of less than 45 µm.

### Example 2

Potato fruit juice from a conventional starch manufacturing process was pumped through a cyclone tank to remove residual fiber and starch particles before a pH adjustment to 5.3 was made. The fruit juice was further heated with steam in a jet cooker to 130 °C and was held for 3 minutes before it was dewatered on a decanter. The protein cake obtained after dewatering was mixed with fresh water to a slurry having a protein content of 13% based on dry matter (DM), and the pH value was adjusted to 3.5 with an acid. The slurry was heated to 50 °C after which the protein was washed with fresh water over hydrocyclones. Equal amounts of protein slurry and fresh water was used for the hydrocyclone wash. The concentrate from the hydrocyclones was diluted with fresh water to a concentration of 3% and was dewatered on a decanter to a content of 40% based on dry matter (DM). The protein cake was further dried in a spin flash dryer to a moisture content of less than 10%. The dry powder was then milled on a conventional classifier mill with a view to reaching the desired particle size. The TGA of the dry powder was less than 100 mg/kg. The particle size of the dry protein powder was analyzed with a Malvern Mastersizer S, and it showed that 90% of the particles had a diameter of less than 30 µm.

### Example 3

Potato fruit juice from a conventional starch manufacturing process was pumped through a cyclone tank to remove residual fiber and starch particles before a pH adjustment to 5.3 was made. The fruit juice was further heated with steam in a jet cooker to 130 °C and was held for 3 minutes before it was dewatered on a decanter. The protein cake obtained after dewatering was mixed with fresh water to a slurry having a protein content of 13% based on dry matter, and the pH value was adjusted to 3.5 with acid. The slurry was heated to 50 °C, after which the protein concentrate was washed with fresh water over hydrocyclones. Equal amounts of protein slurry and fresh water was used for the hydrocyclone wash. The concentrate from the hydrocyclones was diluted to a content of 13% based on dry matter with fresh water before a second hydrocyclone wash was performed. The concentrate obtained after the second wash was then dewatered on a rotating vacuum drum to a content of 35% based on dry matter. The protein cake was further dried in a flash dryer to a moisture content of less than 10%. The dry powder was then milled on a classifier mill to reach desired particle size. The TGA of the dry powder was less than 150 mg/kg. The particle size of the dry protein powder was analyzed with a Malvern Mastersizer S, and it showed that 90% of the particles had a diameter of less than 40 µm.

### Example 4

Potato fruit juice from a conventional starch manufacturing process was pumped through a cyclone tank to remove residual fiber and starch particles before a pH adjustment to 5.3 was made. The fruit juice was further heated with steam in a jet cooker to 130 °C and was held for 3 minutes before it was dewatered on a decanter. The protein cake obtained was further dried in a spin flash dryer to a moisture content of less than 10%. The dry powder was mixed with fresh water to reach a protein content of 13% based on dry matter, and the pH value was adjusted to 3.5 with acid. The slurry was heated to 50 °C, after which the protein was washed with fresh water over hydrocyclones. Equal amounts of protein slurry and fresh water was used for the hydrocyclone wash. The protein concentrate obtained from the hydrocyclone wash was diluted with fresh water to a concentration of 3%, and it was dewatered on a decanter to a protein content of 40% based on dry matter. The protein cake obtained was further dried in a spin flash dryer to a moisture content of less than 10%. The dry powder was then milled on a classifier mill to reach the desired particle size. The TGA of the dry powder was less than 150 mg/kg. The particle size of the dry protein powder was analyzed with a Malvern Mastersizer S, and it showed that 90% of the particles had a diameter of less than 40 µm.

### Example 5

With a view to establishing the correlation between the sedimentation volume index (SVI) and the particle size, three different samples (Samples 1-3) with different particle sizes were measured. The particle size was measured by use of a Malvern Mastersizer S and the SVI was measured by subjecting 1 g potato protein to a sedimentation step in 1000 ml water for 30 minutes. The sediment pellet, recorded as ml, after 30 minutes sedimentation is referred as the SVI value. As appears from the table below there is a clear correlation between the D90 value measured with LALLS and the sedimentation volume after 30 min (SVI).

**Example 6**

| | Particle size D90 (µm) | SVI (ml) |
|---|---|---|
| Sample 1 | 30 | 0,5 |
| Sample 2 | 40 | 1,0 |
| Sample 3 | 45 | 2,4 |

With a view to investigating the organoleptic properties of the refined coagulated potato protein concentrate obtained according to example 2, compared to only a washed coagulated potato protein concentrate, meatballs with 10% added potato protein were evaluated. A panel of 10 people investigated the samples and it was a clear favor for the samples containing the coagulated potato protein concentrate with reduced particle size compared to those containing a coarse potato protein. The gritty mouth feel experienced for the meatballs containing a coarse potato protein was completely eliminated for the meatballs containing potato protein with reduced particle size.

## Claims

1. A method for the preparation of a food grade coagulated potato protein concentrate, wherein it comprises the steps of
a) separating fibers and starch from a potato pulp, wherein a potato fruit juice containing potato protein is obtained,
b) coagulating the potato protein in the potato fruit juice by adjusting the pH to an acidic value and by heating, wherein a coagulated potato protein slurry containing particles of coagulated potato protein is obtained,
c) reducing the total glycoalkaloid content in the coagulated potato protein slurry to less than 150 mg/kg protein concentrate, wherein the total glycoalkaloid content is reduced in a washing step comprising dewatering of the coagulated potato protein slurry and subsequent addition of water, wherein said washing step is performed one or more times, each time followed by a pH adjustment of the protein slurry to 2-7, and heating of the protein slurry to 20-150°C, and
d) actively reducing the particle size of the potato protein particles by physical means in such a way that a coagulated potato protein concentrate is obtained in which 90 % of said particles have a particle size of less than 55 µm, measurable with a Malvern particle analyzer model Mastersizer S with dry powder feeder.

2. The method according to claim 1, wherein the pH in step c) is adjusted to 3.0-5.5, preferably 3.5-4.5, and the protein slurry is heated to 50-150°C, preferably 80-150°C.

3. The method according to claim 1 or 2, wherein the washing step is performed by the use of one or more hydrocyclones.

4. The method according to any one of the preceding claims, wherein the particle size of the potato protein particles is reduced by either
a) homogenization of the coagulated potato protein slurry in a homogenizer or by wet milling, followed by drying, preferably spray drying, or
b) drying of the coagulated potato protein slurry, wherein a dried coagulated potato protein concentrate is obtained, followed by milling, classifying and/or sieving of said dried coagulated potato protein concentrate,

5. The method according to claim 4, wherein the homogenization is performed in one or two steps at a pressure of 50-2000 bar, preferably 100-1500 bar, and more preferably 200-1000 bar.

6. The method according to claim 4, wherein the drying is performed by flash drying, spin flash drying, spray drying, drum drying, or fluid bed drying.

7. The method according to any one of the preceding claims, wherein the total glycoalkaloid content in the coagulated potato protein concentrate is reduced to less than 100 mg/kg protein concentrate, preferably to less than 50 mg/kg protein concentrate.

8. The method according to any one of the preceding claims, wherein the water consumption during said at least one washing step is 1-60 kg/kg DM protein concentrate, preferably 1-40 kg/kg DM protein concentrate, more preferably 1-30 kg/kg DM protein concentrate, and even more preferably 1-20 kg/kg DM protein concentrate.

9. The method according to any one of the preceding claims, wherein 90 % of the particles in said coagulated potato protein concentrate have a particle diameter of less than 45 µm, preferably less than 35 µm.

10. The method according to any one of the preceding claims, wherein the washing step is performed by dewatering the coagulated potato protein concentrate to a dry matter (DM) of 20-60% and is then mixed with water to a concentration of 1-30% w/w, preferably 5-20% w/w, more preferably 10-15% w/w, followed by heating to 20-150°C, preferably 50-150°C, more preferably 80-150°C.

11. A food grade coagulated potato protein concentrate produced by a method according to claims 1-10, having a total glycoalkaloid content of less than 150 mg/kg protein concentrate and containing particles where 90% have a particle diameter of less than 55 µm.

12. The protein concentrate according to claim 11, wherein the protein content is more than 60% w/w, preferably more than 75% w/w, more preferably more than 85% w/w.

13. Use of the food grade coagulated potato protein concentrate according to claim 11 and 12 as a food grade ingredient in a food product, preferably as an ingredient to enrich different kinds of ready meals in view of proteins, wherein it is added as a concentrate to the food product and is mixed therewith.

14. Food product for human use comprising a food grade coagulated potato protein product according to claim 11 and 12, wherein said food product is a dairy product, e.g. creme fraiche, yoghurt, milk based beverages, and drinking yoghurt; a bakery product, e.g. soft bread, crisp bread, crackers etc; meat products like meat balls and products related to comparable mixed meat applications; different kinds of sausages; breakfast cereals; and food bars.

## Patentansprüche

1. Verfahren zur Herstellung eines koagulierten Kartoffelproteinkonzentrats in Lebensmittelqualität, wobei es die Schritte umfasst von
a) Trennen von Fasern und Stärke von einer Kartoffelpulpe, wobei ein Kartoffelfruchtsaft, enthaltend Kartoffelprotein, erhalten wird,
b) Koagulieren des Kartoffelproteins in dem Kartoffelfruchtsaft durch Anpassen des pHs auf einen sauren Wert und durch Erhitzen, wobei eine koagulierte Kartoffelproteinsuspension, enthaltend Partikel von koaguliertem Kartoffelprotein, erhalten wird,
c) Verringern des Gesamtglykoalkaloidgehalts in der koagulierten Kartoffelproteinsuspension auf weniger als 150 mg/kg Proteinkonzentrat, wobei der Gesamtglykoalkaloidgehalt in einem Waschschritt verringert wird, umfassend Entwässern der koagulierten Kartoffelproteinsuspension und anschließende Zugabe von Wasser, wobei der Waschschritt ein oder mehrere Male durchgeführt wird, jedes Mal gefolgt von einer pH-Anpassung der Proteinsuspension auf 2-7 und Erhitzen der Proteinsuspension auf 20-150 °C, und
d) aktives Verringern der Partikelgröße der Kartoffelproteinpartikel durch physikalische Mittel, so dass ein koaguliertes Kartoffelproteinkonzentrat erhalten wird, bei dem 90 % der Partikel eine Partikelgröße von weniger als 55 µm haben, messbar mit einem Malvern Partikelanalysator Modell Mastersizer S mit Trockenpulverzufuhr.

2. Verfahren nach Anspruch 1, wobei der pH in Schritt c) auf 3,0-5,5, vorzugsweise 3,5-4,5, angepasst wird, und die Proteinsuspension auf 50-150 °C, vorzugsweise 80-150 °C, erhitzt wird.

3. Verfahren nach Anspruch 1 oder 2, wobei der Waschschritt unter Verwendung von einem oder mehreren Hydrozyklonen durchgeführt wird.

4. Verfahren nach einem der vorhergehenden Ansprüche, bei dem die Partikelgröße der Kartoffelproteinpartikel durch entweder
a) Homogenisierung der koagulierten Kartoffelproteinsuspension in einem Homogenisator oder durch Nassvermahlung, gefolgt von Trocknen, vorzugsweise Sprühtrocknen, oder
b) Trocknen der koagulierten Kartoffelproteinsuspension, wobei ein getrocknetes koaguliertes Kartoffelproteinkonzentrat erhalten wird, gefolgt von Vermahlen, Sortieren und/oder Sieben des getrockneten koagulierten Kartoffelproteinkonzentrats, verringert wird.

5. Verfahren nach Anspruch 4, wobei die Homogenisierung in einem oder zwei Schritten bei einem Druck von 50-2000 bar, vorzugsweise 100-1500 bar und bevorzugter 200-1000 bar durchgeführt wird.

6. Verfahren nach Anspruch 4, wobei das Trocknen durch Flockentrocknen, Schleuderflockentrocknen, Sprühtrocknen, Trommeltrocknen oder Wirbelschichttrocknen durchgeführt wird.

7. Verfahren nach einem der vorhergehenden Ansprüche, wobei der Gesamtglykoalkaloidgehalt in dem koagulierten Kartoffelproteinkonzentrat auf weniger als 100 mg/kg Proteinkonzentrat, vorzugsweise auf weniger als 50 mg/kg Proteinkonzentrat, verringert wird.

8. Verfahren nach einem der vorhergehenden Ansprüche, wobei der Wasserverbrauch während des wenigstens einen Waschschrittes 1-60 kg/kg TS Proteinkonzentrat, vorzugsweise 1-40 kg/kg TS Proteinkonzentrat, bevorzugter 1-30 kg/kg TS Proteinkonzentrat und noch bevorzugter 1-20 kg/kg TS Proteinkonzentrat ist.

9. Verfahren nach einem der vorhergehenden Ansprüche, wobei 90 % der Partikel in dem koagulierten Kartoffelproteinkonzentrat einen Partikeldurchmesser von weniger als 45 µm, vorzugsweise weniger als 35 µm, haben.

10. Verfahren nach einem der vorhergehenden Ansprüche, wobei der Waschschritt durch Entwässern des koagulierten Kartoffelproteinkonzentrats auf eine Trockensubstanz (TS) von 20-60% durchgeführt wird und dann mit Wasser auf eine Konzentration von 1-30% Gew./Gew., vorzugsweise 5-20% Gew./Gew., bevorzugter 10-15% Gew./Gew. gemischt wird, gefolgt von Erhitzen auf 20-150 °C, vorzugsweise 50-150 °C, besonders bevorzugt 80-150 °C.

11. Koaguliertes Kartoffelproteinkonzentrat in Lebensmittelqualität, hergestellt durch ein Verfahren nach den Ansprüchen 1 - 10, mit einem Gesamtglykoalkaloidgehalt von weniger als 150 mg/kg Proteinkonzentrat und enthaltend Partikel, von denen 90 % einen Partikeldurchmesser von weniger als 55 µm haben.

12. Proteinkonzentrat nach Anspruch 11, wobei der Proteingehalt mehr als 60 % Gew./Gew., vorzugsweise mehr als 75 % Gew./Gew., bevorzugter mehr als 85 % Gew./Gew. ist.

13. Verwendung des koagulierten Kartoffelproteinkonzentrats in Lebensmittelqualität nach Anspruch 11 und 12 als Zutat in Lebensmittelqualität in einem Lebensmittelprodukt, vorzugsweise als Zutat, um verschiedene Arten von Fertiggerichten im Hinblick auf Proteine anzureichern, wobei es dem Lebensmittelprodukt als Konzentrat zugesetzt und damit vermischt wird.

14. Lebensmittelprodukt für den menschlichen Gebrauch, umfassend ein koaguliertes Kartoffelproteinprodukt in Lebensmittelqualität nach Anspruch 11 und 12, wobei das Lebensmittelprodukt ein Milchprodukt, z. B. Crème fraiche, Joghurt, Getränke auf Milchbasis, und Trinkjoghurt; ein Backwarenprodukt, z. B. weiches Brot, Knäckebrot, Cracker etc.; Fleischprodukte wie Fleischbällchen und Produkte, die sich auf vergleichbar gemischt Fleischanwendungen beziehen; verschiedene Arten von Würsten; Frühstückscerealien; und Lebensmittelriegel ist.

## Revendications

1. Procédé de préparation d'un concentré de protéine de pomme de terre coagulée de qualité alimentaire, lequel comprend les étapes consistant à :
a) séparer les fibres et l'amidon d'une pulpe de pomme de terre, un jus du fruit de la pomme de terre contenant une protéine de pomme de terre étant obtenu,
b) coaguler la protéine de pomme de terre dans le jus du fruit de la pomme de terre par ajustement du pH à une valeur acide et par chauffage, une bouillie de protéine de pomme de terre coagulée contenant des particules de protéine de pomme de terre coagulée étant obtenue,
c) réduire la teneur totale en glycoalcaloïdes dans la bouillie de protéine de pomme de terre coagulée à moins de 150 mg/kg de concentré de protéine, la teneur totale en glycoalcaloïdes étant réduite lors d'une étape de lavage comprenant la déshydratation de la bouillie de protéine de pomme de terre coagulée et l'addition ultérieure d'eau, ladite étape de lavage étant réalisée une ou plusieurs fois, chaque fois suivie d'un ajustement du pH de la bouillie de protéine à 2-7 et du chauffage de la bouillie de protéine à 20-150 °C, et
d) réduire activement la taille de particule des particules de protéine de pomme de terre par des moyens physiques de façon à obtenir un concentré de protéine de pomme de terre coagulée dans lequel 90 % desdites particules présentent une taille de particule inférieure à 55 µm, mesurable avec un analyseur de particules Malvern modèle Mastersizer S avec une trémie à poudre sèche.

2. Procédé selon la revendication 1, dans lequel le pH à l'étape c) est ajusté à 3,0-5,5, de préférence à 3,5-4,5, et la bouillie de protéine est chauffée à 50-150 °C, de préférence à 80-150 °C.

3. Procédé selon la revendication 1 ou 2, dans lequel l'étape de lavage est réalisée à l'aide d'un ou plusieurs hydrocyclones.

4. Procédé selon l'une quelconque des revendications précédentes, dans lequel la taille de particule des particules de protéine de pomme de terre est réduite soit par :
a) homogénéisation de la bouillie de protéine de pomme de terre coagulée dans un homogénéisateur, soit par broyage par voie humide, suivi d'un séchage, de préférence d'un séchage par pulvérisation, soit par
b) séchage de la bouillie de protéine de pomme de terre coagulée, un concentré de protéine de pomme de terre coagulée séchée étant obtenu, suivi d'un broyage, d'une classification et/ou d'un tamisage dudit concentré de protéine de pomme de terre coagulée séchée.

5. Procédé selon la revendication 4, dans lequel l'homogénéisation est réalisée en une ou deux étapes à une pression de 50 à 2000 bar, de préférence de 100 à 1500 bar et de manière davantage préférée de 200 à 1000 bar.

6. Procédé selon la revendication 4, dans lequel le séchage est réalisé par séchage éclair, par séchage éclair tournant, par séchage par pulvérisation, par séchage en tambour ou par séchage en lit fluidisé.

7. Procédé selon l'une quelconque des revendications précédentes, dans lequel la teneur totale en glycoalcaloïdes dans le concentré de protéine de pomme de terre coagulée est réduite à moins de 100 mg/kg de concentré de protéine, de préférence à moins de 50 mg/kg de concentré de protéine.

8. Procédé selon l'une quelconque des revendications précédentes, dans lequel la consommation d'eau durant ladite au moins une étape de lavage est de 1 à 60 kg/kg de matière sèche de concentré de protéine, de préférence de 1 à 40 kg/kg de matière sèche de concentré de protéine, de manière davantage préférée de 1 à 30 kg/kg de matière sèche de concentré de protéine et de manière encore davantage préférée, de 1 à 20 kg/kg de matière sèche de concentré de protéine.

9. Procédé selon l'une quelconque des revendications précédentes, dans lequel 90 % des particules dans ledit concentré de protéine de pomme de terre coagulée présentent un diamètre de particule inférieur à 45 µm, de préférence inférieur à 35 µm.

10. Procédé selon l'une quelconque des revendications précédentes, dans lequel l'étape de lavage est réalisée en déshydratant le concentré de protéine de pomme de terre coagulée jusqu'à une matière sèche (MS) de 20 à 60 % et qui est ensuite mélangé à de l'eau jusqu'à une concentration de 1 à 30 % p/p, de préférence de 5 à 20 % p/p, de manière davantage préférée de 10 à 15 % p/p, suivie d'un chauffage à 20-150 °C, de préférence à 50-150 °C, de manière davantage préférée de 80 à 150 °C.

11. Concentré de protéine de pomme de terre coagulée de qualité alimentaire produit par le procédé selon les revendications 1 à 10, présentant une teneur totale en glycoalcaloïdes inférieure à 150 mg/kg de concentré de protéine et contenant des particules parmi lesquelles 90 % présentent un diamètre de particule inférieur à 55 µm.

12. Concentré de protéine selon la revendication 11, dans lequel la teneur en protéine est supérieure à 60 % p/p, de préférence supérieure à 75 % p/p, de manière davantage préférée supérieure à 85 % p/p.

13. Utilisation d'un concentré de protéine de pomme de terre coagulée de qualité alimentaire selon les revendications 11 et 12 en tant qu'ingrédient de qualité alimentaire dans un produit alimentaire, de préférence en tant qu'ingrédient pour enrichir en termes de protéines différents types de plats préparés, où il est ajouté en tant que concentré au produit alimentaire et mélangé à celui-ci.

14. Produit alimentaire destiné à l'usage humain comprenant un produit à base de protéine de pomme de terre coagulée de qualité alimentaire selon les revendications 11 et 12, ledit produit alimentaire étant un produit laitier, par exemple de la crème fraîche, du yaourt, des boissons lactées et du yaourt à boire ; un produit de boulangerie, par exemple du pain de mie, du pain croustillant, des biscuits salés, etc. ; des produits carnés comme des boulettes de viande et des produits associés à des applications à base viande mélangée comparables ; différents types de saucisses ; des céréales pour le petit-déjeuner ; et des barres nutritives.
